# EUROPÄISCHE PATENTSCHRIFT

(11) **EP 3 395 537 B1**
(45) Veröffentlichungstag und Bekanntmachung des Hinweises auf die Patenterteilung: **31.07.2019**
(21) Anmeldenummer: 18167811.1
(22) Anmeldetag: 17.04.2018
(51) Int. Cl.: B29C 48/02, B29C 48/27, B29C 48/30, B29B 9/06

(54) **EXTRUSIONSVORRICHTUNG**
EXTRUSION DEVICE
DISPOSITIF D'EXTRUSION

(30) Priorität: 24.04.2017 DE 102017108720
(43) Veröffentlichungstag der Anmeldung: 31.10.2018
(73) Patentinhaber: Dohle Extrusionstechnik GmbH, 53809 Ruppichteroth (DE)
(72) Erfinder: Dohle, Peter, 53809 Ruppichteroth (DE)
(74) Vertreter: Fritz, Edmund Lothar

(56) Entgegenhaltungen:
- EP-A1- 0 688 657
- WO-A1-2010/112403
- US-A- 3 874 835
- US-A1- 2015 290 875

## Beschreibung

Die vorliegende Erfindung betrifft eine Extrusionsvorrichtung für Extrudat aus Kunststoff umfassend eine Extrudereinheit, in der in einer Förderrichtung ein Extrudat gefördert wird, wobei das Extrudat aus einer Extruderdüse der Extrudereinheit austritt, wobei die Extrusionsvorrichtung eine im Austrittsbereich der Extruderdüse angeordnete Schneidvorrichtung umfasst, geeignet, nach dem Anhalten des Fördervorgangs noch aus der Extruderdüse austretendes Extrudat an der Extruderdüse abzutrennen, wobei die Schneidvorrichtung an der Extrusionsvorrichtung um eine Achse schwenkbar angebracht ist und wobei die Extruderdüse so geformt ist, dass sie im Bereich ihres Austrittsendes eine konvex gekrümmte Fläche umfasst.

Extrusionsvorrichtungen dieser Art sind aus dem Stand der Technik hinlänglich bekannt. Beispielsweise wird eine Extrusionsvorrichtung in der DE 42 36 281 C2 beschrieben. Diese Vorrichtungen werden in der Regel für das Kunststoffschweißen eingesetzt. Dazu wird der aufzuschmelzende Kunststoff der Vorrichtung entweder über einen Kunststoffschweißdraht zugeführt oder es wird ein Kunststoffgranulat verwendet. Granulat oder Schweißdraht werden in der Vorrichtung durch Erwärmung beispielsweise in einer beheizten Extruderschnecke aufgeschmolzen und dann in Förderrichtung zur Extruderdüse gefördert, wo das geschmolzene Extrudat austritt.

Beim Kunststoffschweißen mit größeren Extrudern, die einen entsprechend großen Ausstoß an Kunststoffmasse pro Zeiteinheit haben, ist es in der Regel erforderlich, die zu verschweißenden Bereiche zu erwärmen, damit sie sich mit dem Extrudat verbinden. Hierzu verwendet man Heißluft, die man über die Heißlufteinheit der Extrusionsvorrichtung dem Schweißbereich zuführt. Die Heißluft wird beispielsweise in der Extrusionsvorrichtung selbst erwärmt und dann einer Heißluftdüse zugeführt, über die sie in der Nähe der Extruderdüse ausströmt, so dass man jeweils den Bereich vorwärmt, der anschließend geschweißt werden soll.

Beim 3-D-Druck muss man bei Verwendung kleinerer Extrusionsvorrichtungen oder Extrusionsvorrichtungen mit einem geringeren Ausstoß an Kunststoffmasse pro Zeiteinheit jedoch nicht immer eine Heißlufteinheit verwenden. Das Kunststoffschweißen mit Extrusionsvorrichtungen erfolgt hingegen immer mit der oben genannten Vorwärmung.

In jüngerer Zeit gewinnt die Technologie des 3D-Drucks für die Herstellung von Formteilen aus Kunststoff beispielsweise für Prototypen immer mehr an Bedeutung. Mittels des 3D-Drucks lassen sich auch verhältnismäßig große sehr komplex geformte Bauteile aus Kunststoff vergleichsweise kostengünstig und schnell herstellen. Für die Herstellung von Bauteilen aus thermoplastischen Kunststoffen im 3-D-Druck lassen sich grundsätzlich auch Extrusionsvorrichtungen der vorgenannten Art einsetzen.

Bei der Verwendung von Extrusionsvorrichtungen im 3D-Druck werden in der Regel die Bauteile schichtweise aufgebaut und dabei wird der Bereich, aus dem das Extrudat austritt, in schnellen Bewegungen in X-Richtung, in Y-Richtung und in Z-Richtung geführt. Extrusionsvorrichtungen der in der vorliegenden Erfindung beschriebenen Art lassen sich an eine Steuerung einer 3D-Druck-Maschine anschließen und so für die Herstellung von beispielsweise komplexen Prototypbauteilen aus Kunststoff einsetzen. Die Extruderdüse wird dann gesteuert über die Steuerung der 3D-Druck-Maschine nach deren Vorgaben in X-, Y- und Z-Richtung geführt. Probleme treten dabei dann auf, wenn die Extruderdüse den Extrusionsvorgang unterbricht, weil ein bestimmter Flächenbereich einer Schicht des Bauteils fertiggestellt ist, um dann einen anderen Flächenbereich des gleichen Bauteils anzufahren, wo dann für den Extrusionsvorgang neu angesetzt wird. Die Extrusionsvorrichtung verfährt in diesem Fall ohne zu Extrudieren. Der Vorschub der Kunststoffschmelze zur Extruderdüse hin wird zwar während dieser Phase des Verfahrens gestoppt, aber es lässt sich leider nicht vermieden, dass noch ein Rest des Extrudats aus der Extruderdüse austritt. Dies führt dazu, dass sich quasi dünne Fäden aus diesem Restextrudat bilden, die sich dann von dem Flächenbereich, an dem der Extrusionsvorgang abgeschlossen war, zu dem Flächenbereich hin erstrecken, an dem angefangen wird, neu zu Extrudieren. Dies bedeutet, dass bei jedem Positionswechsel mit Unterbrechung des Extrusionsvorgangs ein solcher dünner Verbindungsfaden erzeugt wird, der naturgemäß unerwünscht ist und daher später wieder entfernt werden muss.

WO 2010/112403 A1, EP 0 688 657 A1 und US 3 874 835 A offenbaren bekannte Extrusionsvorrichtungen.

In der US 2015/0290875 A1 wird eine Vorrichtung für den 3D-Druck beschrieben, bei der das aus der Extruderdüse austretende Extrudat nach dem Anhalten des Fördervorgangs mittels einer Klinge am vorderen Ende der Extruderdüse abgetrennt werden kann, wobei die Klinge eine Translationsbewegung quer zur Achse der Extruderdüse vollführt. Nachteilig bei dieser bekannten Lösung ist unter anderem, dass die Schneidvorrichtung mit der Klinge im zurückgezogenen Zustand seitlich an der Extruderdüse recht weit vorsteht und dadurch der Extrusionsvorgang behindert werden kann, da sich beim 3D-Druck die Extruderdüse in X-, Y und Z-Richtung bewegen muss. Die vorstehende Schneidvorrichtung kann daher dazu führen, dass die Bewegung der Extrusionsvorrichtung relativ zu dem Werkstück eingeschränkt wird.

Eine ähnliche Extrusionsvorrichtung mit seitlich neben der Extruderdüse positionierter Schneidvorrichtung, die den Kunststoffstrang in einer Translationsbewegung abschneidet, ist aus der US 2015/0165666 A1 bekannt. Hier bestehen die gleichen Nachteile wie zuvor beschrieben.

In der US 2017/0028619 A1 wird ebenfalls eine Schneidvorrichtung zum Abtrennen eines Kunststoffstrangs des aus einer Extruderdüse austretenden Extrudats beschrieben. Hier umfasst die Schneidvorrichtung zwei schwenkbar gelagerte Arme, an deren unteren einander zugewandten Enden jeweils Schneidklingen ausgebildet sind, die sich bei einer Schwenkbewegung aufeinander zu bewegen und beim aufeinander treffen den Kunststoffstrang abschneiden. Die Arme sind ein Stück weit oberhalb des Düsenaustritts jeweils um Achsen schwenkbar gelagert und sind vergleichsweise lang, wobei der Schneidvorgang wegen des verhältnismäßig großen Wegs, den die Enden der Arme zurücklegen müssen, relativ viel Zeit beansprucht.

Das Austrittsende des Düsenkopfs hat bei dieser bekannten Extrusionsvorrichtung die Form eines Konus. Zum einen ist auch hier die Schneidvorrichtung bei der Bewegung des Düsenkopfs des Extruders hinderlich. Außerdem werden die Klingen durch Schneidkanten gebildet, die sich durch Verjüngung von plattenförmigen Schneidvorrichtungen an den Armen ergeben, so dass beim Zusammenfahren der beiden Klingen die Schneidkante konstruktionsbedingt immer mit etwas Abstand zum Austrittsende der Düse liegt. Dies führt dazu, dass man die Düse durch die Schneidvorrichtung nicht verschließen kann und folglich immer ein kleiner Rest von Extrudat nach dem Abschneiden des Kunststoffstrangs noch austritt.

Die vorliegende Erfindung verfolgt daher den Zweck, bei diesem Problem Abhilfe zu schaffen. Die Aufgabe der vorliegenden Erfindung besteht darin, eine Extrusionsvorrichtung mit den Merkmalen der eingangs genannten Gattung zur Verfügung zu stellen, die für das Kunststoffschweißen oder auch für die Herstellung von Bauteilen aus Kunststoff in 3-D-Druck Technik geeignet ist, die das unerwünschte Austreten von Restextrudat aus der Extruderdüse nach dem Anhalten des Fördervorgangs des Extrudats verhindert, dabei sehr rasch arbeitet und die Bewegung des Düsenkopfs gegenüber dem Bauteil nicht einschränkt.

Die Lösung dieser Aufgabe liefert eine Extrusionsvorrichtung der eingangs genannten Gattung mit den Merkmalen des Hauptanspruchs.

Erfindungsgemäß ist vorgesehen, dass die Schneidvorrichtung an ihrer der Extruderdüse zugewandten Seite mit einer an diese konvex gekrümmte Fläche angepassten konkav gekrümmten Oberfläche versehen ist, die sich beim Schneidvorgang an der konvex gekrümmten Fläche der Düse entlang bewegt.

Vorzugsweise bewegt sich die Schneidvorrichtung mit ihrer konkav gekrümmten Oberfläche dicht an der konvex gekrümmten Fläche entlang, womit gemeint ist, dass sich die Schneidvorrichtung bei ihrer Schwenkbewegung aus der Offenstellung in die Verschlussstellung unmittelbar an der konvex gekrümmten Fläche der Extruderdüse entlang bewegt, das heißt so dicht, dass die jeweiligen gekrümmten Flächen direkt oder nahezu aneinander liegen. Dies lässt sich technisch ohne weiteres realisieren, wenn man den Kopf der Extruderdüse und die korrespondierende konkave Fläche der Schneidvorrichtung aus einem Material mit guten Gleiteigenschaften ausbildet, beispielsweise aus einem hitzebeständigen Kunststoff mit guter Gleitfähigkeit wie beispielsweise Teflon oder dergleichen. In diesem Fall kann die gekrümmte Oberfläche der Schneidvorrichtung praktisch direkt auf der entsprechend gekrümmten Fläche der Düse gleiten, mit nur vergleichsweise geringer Reibung, so dass es gleichwohl möglich ist, eine sehr rasche Schwenkbewegung der Schneidvorrichtung auszuführen. Die Oberflächen der Schneidvorrichtung und der Düse können beispielsweise aus einem gehärteten Metall oder aus einem hitzebeständigen Kunststoff mit guter Gleitfähigkeit ausgeführt sein.

Das Entlangführen der gekrümmten Oberfläche der Schneidvorrichtung quasi unmittelbar auf der gekrümmten Fläche der Düse hat den Vorteil, dass es möglich ist, die Austrittsöffnung der Düse in der Verschlussstellung, nachdem der Kunststoffstrang abgeschnitten wurde, mittels der Schneidvorrichtung vollständig zu verschließen, so dass aus der Extruderdüse kein Extrudat mehr austreten kann.

Die Schneidvorrichtung kann beispielsweise ein Korpus mit einer innenseitig und somit düsenseitig konkav gekrümmten Oberfläche sein, der sich in dem beim Schneidvorgang der Düsenaustrittsöffnung zugewandten vorderen Bereich so verjüngt, dass sich eine Schneidkante ausbildet, die bei der Gleitbewegung der Schneidvorrichtung über die Düsenaustrittsöffnung hinweg den Kunststoffstrang abschert.

Es gibt grundsätzlich zwei Möglichkeiten der Bewegung der Schneidvorrichtung. Diese kann sich beim Schneidvorgang durch die Ebene der Austrittsöffnung der Düse hindurch bewegen und nach dem Abschneiden des Kunststoffstrangs wieder in ihre Ausgangsstellung zurückbewegen-das heißt es wird eine hin- und her Bewegung vollzogen. Oder alternativ kann sich auch die Schneidvorrichtung durch die Ebene der Austrittsöffnung der Düse hindurch bewegen und danach in einer solchen Position (Verschlussstellung) verharren, ohne sich in die Ausgangsstellung zurück zu bewegen, um so die Extruderdüse für einen definierten Zeitraum zu verschließen. In diesem Fall handelt es sich um eine reine Hinbewegung.

Während im Stand der Technik gemäß der US 2017/0028619 A1 die äußere Form der Extruderdüse und die Schneidvorrichtung unterschiedliche geometrische Formen aufweisen, ist erfindungsgemäß die geometrische Form der Schneidvorrichtung an die Geometrie der äußeren Form der Extruderdüse angepasst. Im Stand der Technik hat die Extruderdüse außenseitig die Form eines Kegelstumpfs, das heißt sie hat eine konvex gekrümmte Oberfläche. Die Schneidvorrichtung besteht jedoch aus zwei schwenkbaren Klingen, die jeweils eine geradlinige Schneidkante aufweisen, wobei sie in der Schneidstellung mit ihren Schneidkanten entlang einer geraden Linie aufeinander treffen. Zwar haben die Klingen oberhalb der Schneidkanten jeweils Schrägflächen, diese sind aber nicht gekrümmt. Folglich ergibt sich in der Schneidstellung auch in dem Bereich oberhalb der eigentlichen Schneidkanten allenfalls eine tangentiale Anlage der Schneidvorrichtung an die Konusfläche der äußeren Form der Düse. Zwischen den beiden aufeinandertreffenden Schneidkanten und der Austrittsöffnung der Düse verbleibt zwangsläufig ein Spalt, der einen Austritt einer (geringeren) Menge an Extrudat nicht verhindert. Dies ist bei der vorliegenden Erfindung anders, da hier die konkav gekrümmte Fläche der Schneidvorrichtung an die konvex gekrümmte Oberfläche an der Außenseite der Extruderdüse angepasst ist.

Vorzugsweise umfasst gemäß einer Weiterbildung der Erfindung die konkav gekrümmte Oberfläche der Schneidvorrichtung im Querschnitt eine Halbkreisform.

Im Rahmen der Entwicklung, die der Erfindung vorausging, wurden Überlegungen angestellt, den unerwünschten Faden an Restextrudat, welcher aus der Extruderdüse noch austritt, über eine geeignete Schneidvorrichtung zu entfernen. Dabei muss man allerdings darauf achten, dass diese Schneidvorrichtung so ausgebildet ist, dass das Verfahren der Extrusionsdüse in einer x-y-Ebene und in z-Richtung in beliebige Richtungen, nicht behindert werden darf, d.h. die Schneidvorrichtung und die für deren Bewegung verwendete Konstruktion darf nicht so ausgebildet sein, dass sie den Extrusionsvorgang stört, indem sie beim Verfahren der Extrusionsdüse im Weg ist. Die konstruktive Lösung ist daher gemäß der vorliegenden Erfindung so, dass das Schneidmesser sich möglichst nahe an der Extruderdüse bewegt und dass das Schneidmesser in seiner Ruheposition so angeordnet ist, dass Verfahrbewegungen des Kopfs der Extrusionsvorrichtung mit der Extruderdüse in beliebige Richtungen möglich sind, ohne dass Teile der Schneidvorrichtung irgendwo kollidieren können.

Gemäß einer bevorzugten Weiterbildung der erfindungsgemäßen Aufgabenlösung ist vorgesehen, das Austrittsende der Extruderdüse abgerundet auszubilden, das heißt das Austrittsende der Extruderdüse mit der Kontur einer gekrümmten Fläche zu versehen. Beispielsweise kann das Austrittsende etwa teilkugelförmig gestaltet sein. Die Schneidvorrichtung hat dabei bevorzugt an ihrer der Extruderdüse zugewandten Seite (hierin auch als Innenseite bezeichnet) eine an die Form dieser gekrümmten Fläche angepasste konkav gekrümmte Oberfläche, beispielsweise etwa entsprechend eine Teilkugelschale. Andere gekrümmte Flächen sind ebenfalls möglich, beispielsweise solche, die an eine Parabelform oder elliptische Form oder die Form eines Hyperbelastes angelehnt sind. Wichtig ist dabei, dass die Schneidvorrichtung einerseits und die Extruderdüse andererseits eine aufeinander abgestimmte Geometrie aufweisen.

Gemäß der Erfindung ist die Schneidvorrichtung an der Extrusionsvorrichtung um eine Achse schwenkbar angebracht. Dies bedeutet, die Schneidvorrichtung vollführt beim Abschneiden eines aus der Extruderdüse noch ausgetretenen Extrudatrests eine Schwenkbewegung, so dass das überschüssige Extrudat abgeschnitten oder abgeschert wird. Es hat sich dabei in der Praxis als vorteilhaft erwiesen, wenn bei dieser Schwenkbewegung die Schneidvorrichtung sich nicht in einer Ebene senkrecht zur Achse der Extruderdüse bewegt, was eventuell die naheliegende Lösung wäre, sondern, dass die Schneidvorrichtung sich entlang der gekrümmten Oberfläche des Austrittsendes der Extruderdüse bewegt. Dies führt zu einer Kinematik, bei der sich die Schneidvorrichtung beim Schneidvorgang quasi um den Kopf der Extruderdüse herum bewegt. Dies erlaubt es zum einen die Schneidvorrichtung sehr eng an der Oberfläche der Extruderdüse entlang zu bewegen und andererseits kann die Schneidvorrichtung in ihrer Ruhestellung eine zurückgezogene Position einnehmen, bei der sie sich oberhalb des Austrittspunkts des Extrudats aus der Extruderdüse befindet und somit außerhalb des Arbeitsbereichs der Extruderdüse. Letztere kann sich dann ungehindert in alle Richtungen innerhalb ihrer Verfahrebene bewegen. Immer dann, wenn ein Positionswechsel der Extruderdüse vorgesehen ist, bei der diese an einer anderen Stelle des Werkstücks neu anfängt und somit das Ausstoßen des Extrudats unterbrochen werden muss, bewegt sich die Schneidvorrichtung möglichst rasch entlang der gekrümmten Kontur des Austrittsendes der Extruderdüse und schneidet das Restextrudat ab, um sich dann wieder in ihre Ruheposition zurück zu bewegen.

Die Teilkugelform des Austrittsendes der Extruderdüse ist besonders vorteilhaft, weil dann die Schneidvorrichtung sich um einen Drehpunkt bewegt und bei ihrer Bewegung immer im gleichen (geringen) Abstand vom Austrittsende der Extruderdüse bleibt.

Besonders bevorzugt ist es so, dass die Schneidvorrichtung an der Extruderdüse so angebracht ist, dass sich die Schwenkachse der Schneidvorrichtung quer zum und durch den Austrittskanal der Extruderdüse erstreckt. Bei ihrer Schneidbewegung bewegt sich dann die Schneidvorrichtung an der Extruderdüse entlang auf einer Kurvenbahn, wobei sie bevorzugt bei jedem Schneidvorgang in einer Hin- und Herbewegung ausgehend von ihrer Ruheposition durch den Austrittspunkt des Extrudats hindurch fährt, dieses abschneidet und dann wieder in ihre Ruheposition zurück fährt.

Vorzugsweise ist gemäß einer Weiterbildung der Erfindung eine einzige Schneidvorrichtung vorgesehen, die sich beim Schneidvorgang mit ihrer Schneidkante in einer Kurvenbahn dicht an der konvex gekrümmten Fläche der Extruderdüse entlang bewegt.

Vorzugsweise ist es weiterhin so, dass die Schneidvorrichtung in der Ausgangsstellung in der Flucht nach unten hin nicht über das Austrittsende der Extruderdüse hinausragt. Dies ist ein wichtiger Aspekt, denn dann steht an der Extruderdüse in der zurückgefahrenen Stellung nach dem Schneidvorgang kein Bauelement der Schneidvorrichtung nach unten hin vor, welches zu einer Behinderung der Bewegungsfreiheit der Extruderdüse beim Verfahren gegenüber dem Werkstück und somit zu einer Kollision mit diesem führen könnte.

Gemäß einer besonders bevorzugten konstruktiven Ausgestaltung ist vorgesehen, dass die Schwenkbewegung der Schneidvorrichtung über ein Gestänge bewirkt wird, welches mit Abstand zur Schwenkachse der Schneidvorrichtung an dieser gelenkig angreift. Ein solches Gestänge schiebt dann bei der Hinbewegung die Schneidvorrichtung ausgehend von ihrer Ruheposition an der Austrittsstelle der Düse vorbei, wobei das Restextrudat abgetrennt wird und zieht dann bei der Rückbewegung die Schneidvorrichtung wieder zurück in ihre Ausgangsposition.

Da der Austrittsbereich der Extruderdüse in der Regel schmaler ist als der sich daran nach hinten hin anschließende Bereich des Extruders, in dem sich Heizvorrichtung, Motor, Getriebe etc. befinden, kann es gemäß einer beispielhaften konstruktiven Ausgestaltung der erfindungsgemäßen Extrusionsvorrichtung vorteilhaft sein, wenn das Gestänge einen neben der Extrudereinheit verlaufenden hinteren Abschnitt aufweist, sowie einen mit diesem verbundenen vorderen Abschnitt, der zur Extruderdüse hin abgewinkelt ist. Bei dieser konstruktiven Variante kann der vordere Abschnitt des Gestänges zu der Extruderdüse hin abgewinkelt ausgebildet sein, um einen Ausgleich dafür zu schaffen, dass das Extrudergehäuse im Bereich der Extruderdüse schmaler ist.

Gemäß einer bevorzugten Weiterbildung der erfindungsgemäßen Aufgabenlösung ist vorgesehen, dass zum Schwenken der Schneidvorrichtung ein Aktuator vorgesehen ist, der an einem Gestänge angreift, welches die Schwenkbewegung der Schneidvorrichtung bewirkt. Die Schneidvorrichtung vollführt somit bei jedem Schneidvorgang eine Schwenkbewegung, wobei das Schwenken mittels des Gestänges bewirkt wird, welches wiederum über den Aktuator betätigt wird.

Da die Schwenkbewegung in der Regel sehr rasch erfolgen muss, damit das noch aus der Extruderdüse ausgetretene Restextrudat in dem kurzen Zeitraum abgeschnitten werden kann, in dem der Extruderkopf von einem Punkt zum anderen verfährt, ohne zu extrudieren, um dann in einer anderen Position wieder mit dem Extrusionsvorgang zu beginnen, ist es vorteilhaft, wenn man für die Betätigung des Gestänges einen geeigneten Aktuator verwendet, der in der Lage ist, die hin und her Bewegung der Schneidvorrichtung in einem möglichst kurzen Zeitraum zu bewerkstelligen. Vorzugsweise greift daher gemäß einer Weiterbildung der Erfindung ein pneumatischer oder elektromagnetischer Aktuator an dem Gestänge an. Elektromotoren kämen grundsätzlich auch als Aktuatoren in Betracht, diese agieren jedoch in der Regel langsamer als beispielsweise ein pneumatischer Aktuator.

Wenn in der vorliegenden Anmeldung von einem Aktuator die Rede ist, der in der Lage ist, die Schwenkbewegung der Schneidvorrichtung sehr schnell durchzuführen, dann bedeutet das, dass der gesamte Schneidvorgang vorzugsweise nicht länger als etwa eine Sekunde benötigt, besonders bevorzugt in weniger als einer Sekunde abläuft, das heißt in einem Sekundenbruchteil erfolgt. Dies kann mit den vorgenannten Aktuatoren ohne weiteres erreicht werden. Die Geschwindigkeit, mit der die Schneidvorrichtung arbeiten muss, hängt auch davon ab, mit welcher Geschwindigkeit die Verfahrbewegung der Extrusionsvorrichtung vor sich geht, denn der Schneidvorgang sollte vorzugsweise vor und/oder während der Verfahrbewegung der Extrusionsvorrichtung ablaufen, damit die Extrusionsvorrichtung in der neuen Position der Extruderdüse sofort wieder anfangen kann zu extrudieren und es zu keiner Verzögerung durch den Schneidvorgang kommt.

Alternativ ist nur eine Hinschwenkbewegung vorgesehen, nach der die Schneidvorrichtung in einer das Austrittsende der Extruderdüse verschließenden Verschlussstellung verharrt, so dass weiteres Austreten jeglichen Extrudats verhindert wird, was dadurch möglich ist, dass die Schneidvorrichtung in dieser Stellung unmittelbar vor der Extruderdüse liegt und in ihrer geometrischen Form an die konvex gekrümmte äußere Fläche der Extruderdüse genau angepasst ist.

Wenn in der vorliegenden Anmeldung von einer "Schneidvorrichtung" die Rede ist, dann bedeutet dies nicht unbedingt, dass es sich um ein typisches Messer oder eine Klinge handelt. Die Schneidvorrichtung kann vielmehr ein kompaktes Bauteil sei, welches um eine Schwenkachse beweglich an der Extrusionsvorrichtung im Bereich des Austrittsendes der Extruderdüse angebracht ist und bevorzugt eine scharfe Kante aufweist, die als eine Art Schneidkante wirkt, wenn sich die schwenkende Schneidvorrichtung möglichst dicht am Austrittsende der Extruderdüse entlang bewegt. Diese scharfe Kante kann auch anstelle einer typischen Schneidbewegung eine Art Scherbewegung ausführen, so dass an der Extrusionsdüse im Nachlauf austretendes Extrudat abgeschert wird. Hier ist zu bedenken, dass das Extrudat ja noch warm ist und somit eine gewisse Plastizität aufweisen kann. Durch die Schneidkante der Schneidvorrichtung wird das nachlaufende Extrudat am Austrittsende der Extruderdüse abgeschert oder abgeschnitten bzw. in jedem Fall durchtrennt, so dass kein unerwünschter Faden von nicht benötigtem Extrudat bei der Verfahrbewegung des Extrusionsvorrichtung gezogen wird. Beim erneuten Ansetzen der Extrusionsvorrichtung in der neuen Position ist dann das Austrittsende von Restextrudat befreit und die Extrusionsvorrichtung kann mit sauberer Extruderdüse wieder frisches Extrudat für den weiteren Extrusionsprozess ausstoßen.

Gegenstand der vorliegenden Erfindung ist weiterhin ein Verfahren zum Betrieb einer Extrusionsvorrichtung mit den zuvor beschriebenen Merkmalen, bei dem die Extrusionsvorrichtung in einer ersten Arbeitsposition arbeitet und nach Beendigung des Extrusionsvorgangs in dieser ersten Arbeitsposition die Extrusionsvorrichtung in einer x-y-Ebene in eine zweite Arbeitsposition verfährt und während dieses Verfahrens kein Ausstoß von Extrudat an der Extruderdüse erfolgt, dadurch gekennzeichnet, dass mittels einer Schneidvorrichtung nach Beendigung des Extrusionsvorgangs in der ersten Arbeitsposition noch an der Extruderdüse austretendes Restextrudat vor und/oder während des Verfahrens der Extruderdüse abgetrennt wird.

Da bei einem Extrusionsvorgang im Rahmen eines 3-D-Drucks das zu druckende Modell schichtweise aufgebaut wird, muss die Extrusionsvorrichtung in der Regel außerdem auch in einer z-Richtung Verfahren, die sich senkrecht zu der vorgenannten x-y-Ebene erstreckt. Mit dem Verfahren in einer x-y-Ebene ist also zusätzlich ein Verfahren in z-Richtung verbunden, immer nachdem eine Schicht des Modells aufgebaut wurde.

Vorzugsweise wird das Restextrudat durch eine Schwenkbewegung der Schneidvorrichtung abgetrennt. Besonders bevorzugt erfolgt dieses Abtrennen durch ein hin und her Schwenken der Schneidvorrichtung.

Insbesondere schwenkt die Schneidvorrichtung bei dem Schneidvorgang entlang einer Kurvenbahn, wobei eine Schwenkbewegung etwa auf einer Kreisbahn besonders bevorzugt ist.

Weiterhin ist es bevorzugt so, dass sich die Schneidvorrichtung bei diesem Schwenkvorgang möglichst dicht an der Extruderdüse entlang bewegt, deren Austrittsende bevorzugt etwa in Form einer Teilkugel gestaltet ist.

Die in den Unteransprüchen beschriebenen Merkmale betreffen bevorzugte Weiterbildungen der erfindungsgemäßen Aufgabenlösung. Weitere Vorteile der vorliegenden Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher erläutert. Dabei zeigen:
Figur 1 eine perspektivische Ansicht des vorderen Bereichs einer erfindungsgemäßen Extrusionsvorrichtung;
Figur 2 eine schematisch vereinfachte Seitenansicht einer erfindungsgemäßen Extrusionsvorrichtung;
Figur 3 einen Längsschnitt durch den vorderen Bereich einer erfindungsgemäßen Extrusionsvorrichtung;
Figur 4 eine perspektivische Explosionsansicht eines Teils des vorderen Bereichs der Extrusionsvorrichtung, wobei man auf die Innenseite der Schneidvorrichtung schaut.

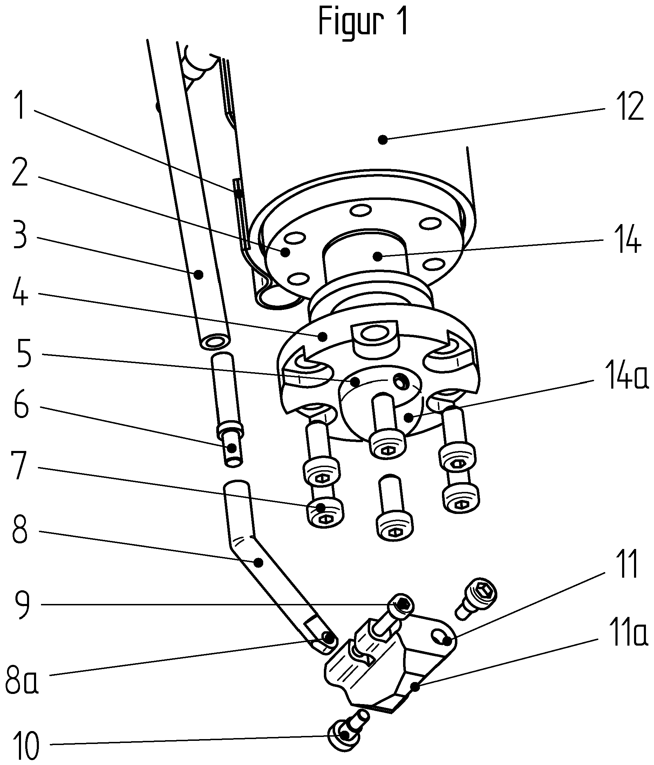

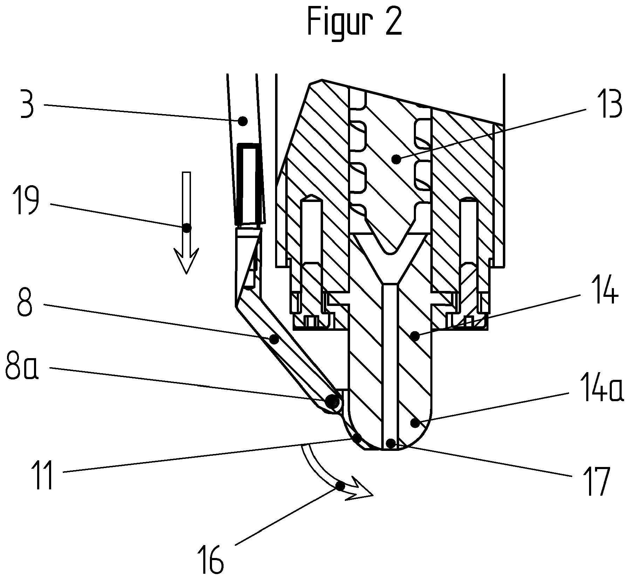

Zunächst wird auf die Figur 1 Bezug genommen, die eine perspektivische Ansicht des vorderen Bereichs einer beispielhaften Extrusionsvorrichtung zeigt, wobei die Bauteile teilweise in einer Explosionsansicht dargestellt sind. Man erkennt hier einen Teil des Extrudergehäuses 12, in dem sich eine Extruderschnecke 13 befindet, die man in Figur 2 andeutungsweise erkennen kann. Aus dem Extrudergehäuse 12 ragt der vordere Bereich einer Extruderdüse 14 hervor. Man sieht, dass diese Extruderdüse 14 im hinteren Abschnitt im Wesentlichen zylindrisch ist, in ihrem vorderen Bereich jedoch abgerundet ist, so dass der vordere Bereich 14 a in etwa die Form einer Teilkugel hat. Weiterhin erkennt man in Figur 1 die Schneidvorrichtung 11, die mit einer Schneidkante 11 a ausgestattet ist.

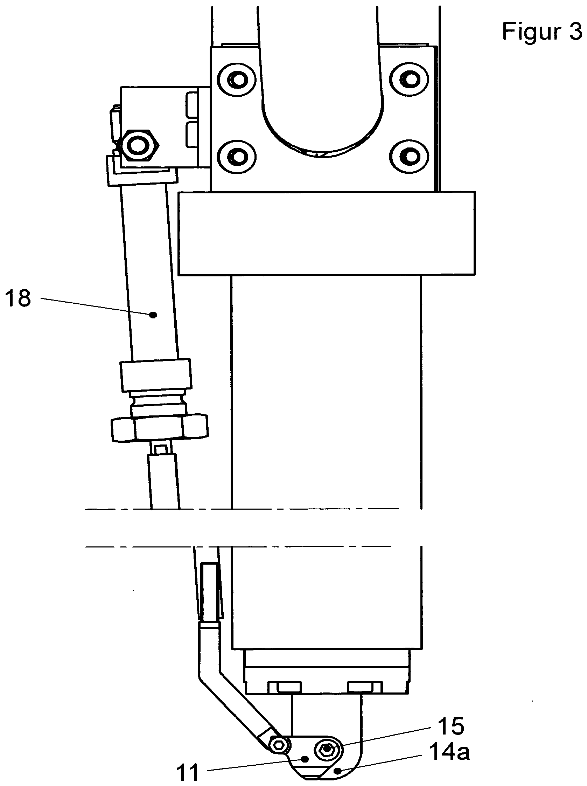

Diese Schneidvorrichtung 11 ist schwenkbar in einem vorderen Bereich 14 a der Extruderdüse 14 angebracht und zwar um eine Achse schwenkbar, die sich quer durch die Extruderdüse erstreckt, was man in Figur 3 erkennen kann, wo der Anlenkpunkt 15 dargestellt ist, um den die Schneidvorrichtung 11 schwenkt. Die Schwenkbewegung der Schneidvorrichtung 11 wird bewirkt über ein Gestänge umfassend eine Zugstange 3, die sich im Wesentlichen mit Abstand in Längsrichtung entlang des Extrudergehäuses 12 erstreckt. Über einen Adapter 6 ist diese Zugstange 3 mit einem im stumpfen Winkel in Richtung auf die Extruderdüse 14 abgewinkelten Hebel 8 verbunden, welcher ebenfalls Teil des Gestänges ist und welcher an seinem einen Ende 8 a gelenkig mit der Schneidvorrichtung 11 verbunden ist.

Der montierte Zustand der Bauteile dieses Gestänges ist in der Längsschnittdarstellung gemäß Figur 2 dargestellt. Dort ist auch durch einen Pfeil 16 angedeutet, wie die Schneidvorrichtung 11 aus der in Figur 2 gezeigten Ruheposition um ihre Achse in die Schneidposition schwenkt und wieder zurück. Bei diesem Schwenkvorgang passiert die Schneidvorrichtung 11 den Austrittskanal 17 über den das Extrudat aus der Extruderdüse 14 austritt. Dargestellt ist in Figur 2 die Ruheposition. Man kann in Figur 2 auch einen Teil der im Extrudergehäuse etwa mittig angeordneten Extruderschnecke 13 erkennen, die rotierend angetrieben wird und erhitzt wird, so dass aufgeschmolzener Kunststoff als Extrudat in den Austrittskanal 17 gefördert wird und am vorderen Ende der Extruderdüse 14 aus diesem Austrittskanal 17 austritt. Für die Versorgung der Extruderschnecke 13 mit Kunststoff kann man in üblicher Weise entweder Granulat verwenden, welches in der Extruderschnecke aufgeschmolzen wird, oder aber auch Kunststoffschweißdraht, der zugeführt und in der Extruderschnecke aufgeschmolzen wird.

Wenn der Extrusionsvorgang unterbrochen wird, weil die Extrusionsvorrichtung in eine andere Position verfährt, um dort den Extrusionsvorgang vom neuen zu beginnen, wird das durch Nachlaufen noch aus der Extruderdüse 14 austretende Restextrudat mittels der Schneidvorrichtung abgetrennt. Dazu wird über den in Figur 3 eingezeichneten Aktuator 18, bei dem es sich beispielsweise um einen Pneumatikzylinder handelt, die Zugstange 3 des Gestänges in Richtung des Pfeils 19 in Figur 2 verschoben. Dies führt zu einer Vorschubbewegung des abgewinkelten Hebels 8, welcher mit der Zugstange 3 verbunden ist. An seinem vorderen unteren Ende 8 a ist dieser Hebel 8 gelenkig mit der Schneidvorrichtung 11 verbunden und schiebt diese in Richtung des Pfeils 16, so dass diese eine Schwenkbewegung vollführt. Die Schneidvorrichtung hat eine konkav gekrümmte Innenkontur, die an die Teilkugelform des vorderen Bereichs 14 a der Extruderdüse 14 angepasst ist, wie man in der Schnittdarstellung gemäß Figur 2 gut erkennen kann. Die Vorschubbewegung wird somit in eine Schwenkbewegung der Schneidvorrichtung 11 umgewandelt, bei der sich diese an der teilkugelförmigen Kontur der Extruderdüse 14 entlang bewegt und dabei den Austrittskanal 17 passiert und das Restextrudat abschert. Danach bewegt sich die Schneidvorrichtung in einer raschen Bewegung wieder zurück in die in Figur 2 dargestellte Ausgangsposition (Ruheposition), wobei diese Rückbewegung über die pneumatisch betätigte Zugstange 3 veranlasst wird. Die genannte Ruheposition, in der die Schneidvorrichtung zurückgezogen ist, ist auch gleichzeitig die Arbeitsposition der Extruderdüse.

Die Schwenkbewegung der Schneidvorrichtung 11 ergibt sich daraus, dass diese wie in Figur 3 erkennbar ist über den Anlenkpunkt 15 im vorderen Bereich 14 a an der Extruderdüse schwenkbar angebracht ist. Die Schwenkachse erstreckt sich somit durch den Anlenkpunkt 15 in Querrichtung durch die Extruderdüse 14 und somit senkrecht zur Achse (Austrittskanal 17) der Extruderdüse. Bei dieser Schwenkbewegung bewegt sich die Schneidvorrichtung 11 zum einen sehr dicht an der teilkugelförmigen Kontur der Extruderdüse 14 entlang, wie man in Figur 2 erkennen kann, und außerdem folgt die Schneidvorrichtung der abgerundeten teilkugelförmigen Kontur der Extruderdüse, denn sie ist innenseitig entsprechend dieser Teilkugelform konkav gekrümmt geformt. Der Anlenkpunkt 15, der die Schwenkachse der Schneidvorrichtung 11 definiert, ist so gewählt, dass die Entfernung zum Austrittspunkt der Extruderdüse 14 dem Radius der Teilkugelform des Austrittsendes 14 a der Extruderdüse entspricht. Dies führt dazu, dass sich die Schneidvorrichtung immer dicht entlang der Extruderdüse 14 bewegt. Außerdem ist die in Figur 2 dargestellte Ruheposition der Schneidvorrichtung 11 so, dass die Schneidkante 11 a der Schneidvorrichtung 11 nicht über das vordere Austrittsende der Extruderdüse 14 hinausragt und somit beim Verfahren und Extrudieren der Extrusionsvorrichtung in deren Arbeitsphase nicht hinderlich ist.

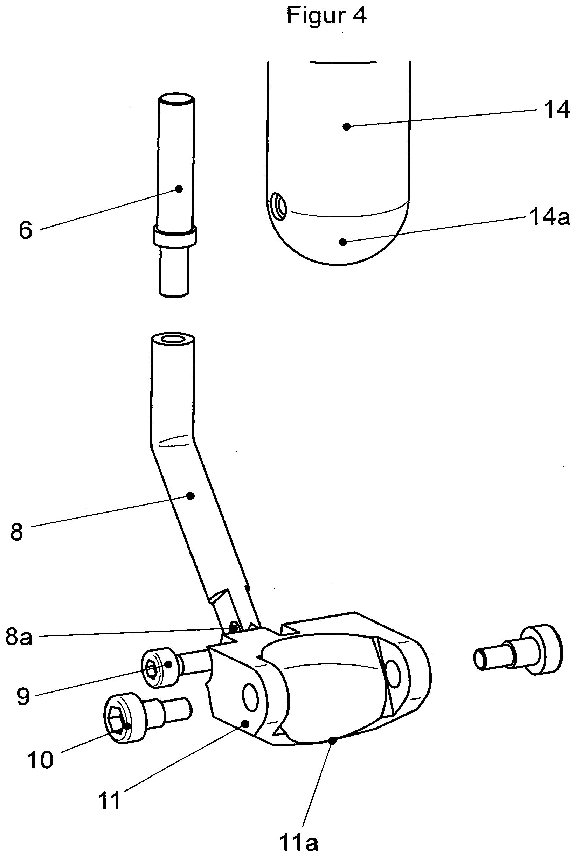

In Figur 4 kann man erkennen, dass das untere Ende 8a des abgewinkelten Abschnitts des Gestänges mittels der Zylinderschraube 9 gelenkig mit der Schneidvorrichtung 11 verbunden ist. Im Anlenkpunkt 15 wird die gelenkige Anbringung der schwenkbaren Schneidvorrichtung 11 an der Extruderdüse 14 über die Schraube 10, beispielsweise eine Pass-Schulterschraube, bewirkt.

### Bezugszeichenliste

- 3: Zugstange des Gestänges
- 6: Adapter
- 8: abgewinkelter Abschnitt des Gestänges
- 8 a: Ende des abgewinkelten Abschnitts
- 9: Schraube
- 10: Schraube
- 11: Schneidvorrichtung
- 11 a: Schneidkante
- 12: Extrudergehäuse
- 13: Extruderschnecke
- 14: Extruderdüse
- 14 a: Austrittsende der Extruderdüse
- 15: Anlenkpunkt
- 16: Pfeil
- 17: Austrittskanal
- 18: Aktuator
- 19: Pfeil

## Patentansprüche

1. Extrusionsvorrichtung für Extrudat aus Kunststoff umfassend eine Extrudereinheit, in der in einer Förderrichtung ein Extrudat gefördert wird, wobei das Extrudat aus einer Extruderdüse der Extrudereinheit austritt, wobei die Extrusionsvorrichtung eine im Austrittsbereich der Extruderdüse (14) angeordnete Schneidvorrichtung (11) umfasst, geeignet, nach dem Anhalten des Fördervorgangs noch aus der Extruderdüse austretendes Extrudat an der Extruderdüse (14) abzutrennen, wobei die Schneidvorrichtung (11) an der Extrusionsvorrichtung (14) um eine Achse schwenkbar angebracht ist und wobei die Extruderdüse (14) so geformt ist, dass sie im Bereich ihres Austrittsendes (14 a) eine konvex gekrümmte Fläche umfasst, wobei die Schneidvorrichtung (11) an ihrer der Extruderdüse (14) zugewandten Seite mit einer an diese konvex gekrümmte Fläche angepassten konkav gekrümmten Oberfläche versehen ist, die sich beim Schneidvorgang an der konvex gekrümmten Fläche der Düse entlang bewegt.

2. Extrusionsvorrichtung nach Anspruch 1, **dadurch gekennzeichnet, dass** die konkav gekrümmte Oberfläche der Schneidvorrichtung (11) im Querschnitt eine Halbkreisform umfasst.

3. Extrusionsvorrichtung nach Anspruch 1oder 2, **dadurch gekennzeichnet, dass** das Austrittsende (14 a) der Extruderdüse (14) eine etwa teilkugelförmige Fläche umfasst und die Schneidvorrichtung (11) an ihrer der Extruderdüse (14) zugewandten Seite mit einer an die Teilkugelform angepassten konkav gekrümmten Oberfläche versehen ist.

4. Extrusionsvorrichtung nach Anspruch 1 oder 2, **dadurch gekennzeichnet, dass** das Austrittsende (14 a) der Extruderdüse (14) eine etwa teilzylinderförmige Fläche umfasst und die Schneidvorrichtung (11) an ihrer der Extruderdüse (14) zugewandten Seite mit einer an die Teilzylinderform angepassten konkav gekrümmten Oberfläche versehen ist.

5. Extrusionsvorrichtung nach einem der Ansprüche 1 bis 4, **dadurch gekennzeichnet, dass** die Schneidvorrichtung (11) an der Extruderdüse so angebracht ist, dass sich die Schwenkachse der Schneidvorrichtung (11) quer zum und durch den Austrittskanal (17) der Extruderdüse erstreckt.

6. Extrusionsvorrichtung nach einem der Ansprüche 1 bis 5, **dadurch gekennzeichnet, dass** eine einzige Schneidvorrichtung (11) vorgesehen ist, die sich beim Schneidvorgang mit ihrer Schneidkante (11 a) in einer Kurvenbahn dicht an der konvex gekrümmten Fläche der Extruderdüse (14) entlang bewegt.

7. Extrusionsvorrichtung nach einem der Ansprüche 1 bis 6, **dadurch gekennzeichnet, dass** die Schneidvorrichtung (11) einen Korpus umfasst, mit einer innenseitig und somit düsenseitig konkav gekrümmten Oberfläche, der sich in dem beim Schneidvorgang der Düsenaustrittsöffnung zugewandten vorderen Bereich so verjüngt, dass sich eine Schneidkante (11 a) ausbildet, die bei der Gleitbewegung der Schneidvorrichtung 811) über die Düsenaustrittsöffnung (14 a) hinweg den Kunststoffstrang abschert.

8. Extrusionsvorrichtung nach einem der Ansprüche 1 bis 7, **dadurch gekennzeichnet, dass** die Schneidvorrichtung (11) außenseitig an der Extruderdüse (14) um eine Achse schwenkbar angebracht ist, wobei die Schwenkbewegung der Schneidvorrichtung (11) über ein Gestänge (3, 8) bewirkt wird, welches mit Abstand zur Schwenkachse der Schneidvorrichtung (11) an dieser gelenkig angreift.

9. Extrusionsvorrichtung nach einem der Ansprüche 1 bis 8, **dadurch gekennzeichnet, dass** die Schneidvorrichtung (11) in der Ausgangsstellung in der Flucht nach unten hin nicht über das Austrittsende (14 a) der Extruderdüse hinausragt.

10. Extrusionsvorrichtung nach einem der Ansprüche 8 oder 9, **dadurch gekennzeichnet, dass** das Gestänge (3, 8) einen neben der Extrudereinheit verlaufenden hinteren Abschnitt (3) aufweist sowie einen mit diesem verbundenen vorderen Abschnitt (8), der zur Extruderdüse (14) hin abgewinkelt ist.

11. Extrusionsvorrichtung nach einem der Ansprüche 8 bis 10, **dadurch gekennzeichnet, dass** zum Schwenken der Schneidvorrichtung (11) ein Aktuator (18) vorgesehen ist, der an einem Gestänge angreift, welches die Schwenkbewegung der Schneidvorrichtung bewirkt.

12. Extrusionsvorrichtung nach einem der Ansprüche 8 bis 11, **dadurch gekennzeichnet, dass** der Aktuator (18) und das Gestänge (3, 8) die Schneidvorrichtung (11) beim Schneidvorgang in einer Schubbewegung entlang der konvex gekrümmten Fläche der Extruderdüse (14) bewegen.

13. Extrusionsvorrichtung nach Anspruch 11 oder 12, **dadurch gekennzeichnet, dass** ein pneumatischer oder elektromagnetischer Aktuator (18) an dem Gestänge (3) angreift.

14. Extrusionsvorrichtung nach einem der Ansprüche 11 bis 13, **dadurch gekennzeichnet, dass** ein Aktuator (18) vorgesehen ist, der eine sehr schnelle Schwenkbewegung der Schneidvorrichtung (11), vorzugsweise in weniger als 1 Sekunde, bewirkt.

15. Extrusionsvorrichtung nach einem der Ansprüche 1 bis 14, **dadurch gekennzeichnet, dass** eine Hinschwenkbewegung und eine Rückschwenkbewegung der Schneidvorrichtung (11) zurück in ihre Ausgangsposition in einem sehr kurzen Zeitraum, vorzugsweise in weniger als 1 Sekunde vorgesehen ist oder nur eine Hinschwenkbewegung vorgesehen ist, nach der die Schneidvorrichtung in einer das Austrittsende (14 a) der Extruderdüse verschließenden Verschlussstellung verharrt.

16. Verfahren zum Betrieb einer Extrusionsvorrichtung mit den Merkmalen eines der Ansprüche 1 bis 15, bei dem die Extrusionsvorrichtung in einer ersten Arbeitsposition arbeitet und nach Beendigung des Extrusionsvorgangs in dieser ersten Arbeitsposition die Extrusionsvorrichtung in einer x-y-Ebene in eine zweite Arbeitsposition verfährt und während dieses Verfahrens kein Ausstoß von Extrudat an der Extruderdüse (14) erfolgt, **dadurch gekennzeichnet, dass** mittels einer Schneidvorrichtung (11) nach Beendigung des Extrusionsvorgangs in der ersten Arbeitsposition noch an der Extruderdüse (14) austretendes Restextrudat vor und/oder während des Verfahrens der Extruderdüse (14) abgetrennt wird.

17. Verwendung einer Extrusionsvorrichtung mit den Merkmalen eines der Ansprüche 1 bis 15 in einem Verfahren gemäß Anspruch 16.

## Claims

1. Extrusion device for extrudate of plastic comprising an extruder unit in which an extrudate is conveyed in a conveying device, wherein the extrudate emerges from an extruder nozzle of the extruder unit, wherein the extrusion device comprises a cutting device (11), arranged in the emergence area of the extruder nozzle (14), suitable for severing extrudate on the extruder nozzle (14) still emerging from the extruder nozzle after stopping of the conveying procedure, wherein the cutting device (11) is applied to the extrusion device (14) in a pivotable manner about an axis and wherein the extruder nozzle (14) is formed in such a way that in the area of its emergence end (14 a) it has a convexly curved surface, **characterised in that** the cutting device (11) on its side facing the extruder nozzle (14) is provided with a concavely curved surface, matched to this convexly curved surface, which during the cutting procedure moves along the convexly curved surface of the nozzle.

2. Extrusion device according to claim 1 **characterised in that** the concavely curved surface of the cutting device (11) is semi-circular in cross-section.

3. Extrusion device according to claim 1 or 2 **characterised in that** the emergence end (14 a) of the extruder nozzle (14) has an approximately partially spherically-shaped surface and on its side facing the extruder nozzle (14) the cutting device (11) is provided with a concavely curved surface matched to the partial spherical shape.

4. Extrusion device according to claim 1 or 2 **characterised in that** the emergence end (14 a) of the extruder nozzle (14) has an approximately partially cylindrically-shaped surface and on its side facing the extruder nozzle (14) the cutting device (11) is provided with a concavely curved surface matched to the partial cylindrical shape.

5. Extrusion device according to any one of claims 1 to 4 **characterised in that** the cutting device (11) is applied to the extruder nozzle in such a way that the pivoting axis of the cutting device (11) extends perpendicularly to and through the emergence channel (17) of the extruder nozzle.

6. Extrusion device according to any one of claims 1 to 5 **characterised in that** the a single cutting device (11) is provided which during the cutting procedure moves with its cutting edge (11 a) along a curved path close to the convexly curved surface of the extruder nozzle (14) .

7. Extrusion device according to any one of claims 1 to 6 **characterised in that** the cutting device (11) comprises a body with an inner and thus nozzle-side curved surface which in the forward area facing the nozzle emergence opening during the cutting procedure narrows in such a way that a cutting edge (11 a) is formed which severs the plastic strand during the sliding movement of the cutting device (11) across the nozzle emergence opening (14 a).

8. Extrusion device according to any one of claims 1 to 7 **characterised in that** the cutting device (11) is applied externally on the extruder nozzle (14) in a pivoting manner about an axis, wherein the pivoting movement of the cutting device (11) is brought about via a rod assembly (3, 8), which at a distance from the pivoting axis of the cutting device (11) acts thereon in an articulated manner.

9. Extrusion device according to any one of claims 1 to 8 **characterised in that** in the initial position the cutting device (11) in the downwards alignment does not project beyond the emergence end (14 a) of the extruder nozzle.

10. Extrusion device according to any one of claims 8 or 9 **characterised in that** the rod assembly (3, 8) has a rear section (3) extending next to the extruder unit as well as a forward section (8) connected thereto which is at an angle to the extruder nozzle (14).

11. Extrusion device according to any one of claims 8 to 10 **characterised in that** to pivot the cutting device (11) an actuator (18) is provided which acts on s rod assembly, which brings about the pivoting movement of the cutting device.

12. Extrusion device according to any one of claims 8 to 11 **characterised in that** the actuator (18) and the rod assembly (3, 8) move the cutting device (11) during the cutting procedure in a pushing movement along the convexly curved surface of the extruder nozzle (14).

13. Extrusion device according to claim 11 or 12 **characterised in that** a pneumatic or electromagnetic actuator (18) acts on the rod assembly (3).

14. Extrusion device according to any one of claims 11 to 13 **characterised in that** an actuator (18) is provided which brings about a very rapid pivoting movement of the cutting device (11), preferably in less than 1 second.

15. Extrusion device according to any one of claims 1 to 14 **characterised in that** outward pivoting movement and a return pivoting movement of the cutting device (11) back into its initial position is provided in a very short period of time, preferably in less than 1 second, or only an outward pivoting movement is provided after which the cutting device remains in a closing position closing off the emergence end (14 a) of the extruder nozzle.

16. Method of operating an extrusion device with the features of any one of claims 1 to 15 in which the extrusion device operates in a first operating position and after ending of the extrusion procedure in this first operating position the extrusion device moves in an x-y plane into a second operating position and during this procedure no extrudate is ejected at the extruder nozzle (14), **characterised in that** by means of a cutting device (11), after ending of the extrusion procedure in the first operation position , residual extrudate still emerging at the extruder nozzle (14) is severed before and/or during the displacement of the extruder nozzle (14).

17. Use of an extrusion device with the features of any one of claims 1 to 15 in a method in accordance with claim 16.

## Revendications

1. Dispositif d'extrusion pour un produit d'extrusion en matière plastique comprenant une unité d'extrusion dans laquelle un produit d'extrusion est transporté dans un dispositif de transport, sachant que le produit d'extrusion sort d'une filière d'extrudeuse de l'unité d'extrusion, sachant que le dispositif d'extrusion comprend un dispositif de découpe (11) disposé dans la zone de sortie de la filière d'extrudeuse (14), adapté pour séparer à la filière d'extrudeuse (14) un produit d'extrusion sortant encore de la filière d'extrudeuse après arrêt de l'opération de transport, sachant que le dispositif de découpe (11) est monté sur le dispositif d'extrusion (14) pouvant pivoter autour d'un axe et sachant que la filière d'extrudeuse (14) est formée de telle sorte qu'elle comprend à proximité de son extrémité de sortie (14 a) une surface courbée de façon convexe, **caractérisé en ce que** le dispositif de découpe (11) est doté sur son côté tourné vers la filière d'extrudeuse (14) d'une surface courbée de façon concave adaptée à la surface courbée de façon convexe, qui se déplace le long de la filière lors de l'opération de découpe sur la surface courbée de façon convexe.

2. Dispositif d'extrusion selon la revendication 1, **caractérisé en ce que** la surface courbée de façon concave du dispositif de découpe (11) comprend en section une forme demi-circulaire.

3. Dispositif d'extrusion selon la revendication 1 ou 2, **caractérisé en ce que** l'extrémité de sortie (14 a) de la filière d'extrudeuse (14) comprend une surface à peu près de forme partiellement sphérique et le dispositif de découpe (11) est doté sur son côté tourné vers la filière d'extrudeuse (14) d'une surface courbée de façon concave adaptée à la forme partiellement sphérique.

4. Dispositif d'extrusion selon la revendication 1 ou 2, **caractérisé en ce que** l'extrémité de sortie (14 a) de la filière d'extrudeuse (14) comprend une surface à peu près partiellement cylindrique et le dispositif de découpe (11) est doté sur son côté tourné vers la filière d'extrudeuse (14) d'une surface courbée de façon concave adaptée à la forme partiellement cylindrique.

5. Dispositif d'extrusion selon l'une quelconque des revendications 1 à 4, **caractérisé en ce que** le dispositif de découpe (11) est monté sur la filière d'extrudeuse de telle manière que l'axe de pivotement du dispositif de découpe (11) s'étend transversalement au et à travers le conduit de sortie (17) de la filière d'extrudeuse.

6. Dispositif d'extrusion selon l'une quelconque des revendications 1 à 5, **caractérisé en ce qu'**un dispositif de découpe unique (11) est prévu, qui se déplace lors de l'opération de découpe avec son bord tranchant (11 a) dans une trajectoire courbe très prêt de la surface courbée de façon convexe de la filière d'extrudeuse (14) .

7. Dispositif d'extrusion selon l'une quelconque des revendications 1 à 6, **caractérisé en ce que** le dispositif de découpe (11) comprend un corps avec une surface courbée de façon concave du côté intérieur et de ce fait du côté de la filière, qui se réduit dans la zone avant tournée vers l'ouverture de sortie de filière lors de l'opération de découpe de telle manière qu'un bord tranchant (11 a) est constitué, qui cisaille le boudin de plastique à travers l'ouverture de sortie de filière (14 a) lors du mouvement de glissement du dispositif de découpe (11).

8. Dispositif d'extrusion selon l'une quelconque des revendications 1 à 7, **caractérisé en ce que** le dispositif de découpe (11) est monté en extérieur sur la filière d'extrudeuse (14) pouvant pivoter autour d'un axe, sachant que le mouvement de pivotement du dispositif de découpe (11) est causé par une tringlerie (3, 8), laquelle vient en prise sur celui-ci de façon articulée à distance de l'axe de pivotement du dispositif de découpe (11).

9. Dispositif d'extrusion selon l'une quelconque des revendications 1 à 8, **caractérisé en ce que** le dispositif de découpe (11) dans la position de sortie ne dépasse pas de l'extrémité de sortie (14 a) de la filière d'extrudeuse dans l'alignement vers le bas.

10. Dispositif d'extrusion selon l'une quelconque des revendications 8 ou 9, **caractérisé en ce que** la tringlerie (3, 8) comporte une section (3) arrière passant près de l'unité d'extrudeuse ainsi qu'une section avant (8) reliée à celle-ci qui est coudée vers la filière d'extrudeuse (14).

11. Dispositif d'extrusion selon l'une quelconque des revendications 8 à 10, **caractérisé en ce que** pour faire pivoter le dispositif de découpe (11), un actionneur (18) est prévu, qui vient en prise sur une tringlerie, laquelle cause le mouvement de pivotement du dispositif de découpe.

12. Dispositif d'extrusion selon l'une quelconque des revendications 8 à 11, **caractérisé en ce que** l'actionneur (18) et la tringlerie (3, 8) déplacent le dispositif de découpe (11) lors de l'opération de découpe dans un mouvement de translation le long de la surface courbée de façon convexe de la filière d'extrudeuse (14).

13. Dispositif d'extrusion selon la revendication 11 ou 12, **caractérisé en ce qu'**un actionneur pneumatique ou électromagnétique (18) vient en prise sur la tringlerie (3) .

14. Dispositif d'extrusion selon l'une quelconque des revendications 11 à 13, **caractérisé en ce qu'** un actionneur (18) est prévu, qui cause un mouvement de pivotement très rapide du dispositif de découpe (11), de préférence en moins d'1 seconde.

15. Dispositif d'extrusion selon l'une quelconque des revendications 1 à 14, **caractérisé en ce qu'**un mouvement de pivotement en avant et un mouvement de pivotement en arrière du dispositif de découpe (11) en retour à sa position initiale dans une période de temps très courte, de préférence en moins d'1 seconde, sont prévus ou bien seul un mouvement de pivotement en avant est prévu après lequel le dispositif de découpe reste dans une position de fermeture fermant l'extrémité de sortie (14 a) de la filière d'extrudeuse.

16. Procédé destiné à faire fonctionner un dispositif d'extrusion avec les caractéristiques selon l'une quelconque des revendications 1 à 15, pour lequel le dispositif d'extrusion fonctionne dans une première position de travail et une fois terminée l'opération d'extrusion dans cette première position de travail, le dispositif d'extrusion se déplace dans un plan x-y dans une deuxième position de travail et pendant ce déplacement aucune expulsion de production de produit d'extrusion n'a lieu sur la filière d'extrudeuse (14), **caractérisé en ce qu'**un produit d'extrusion résiduel sortant encore à la filière d'extrudeuse (14) est séparé avant et/ou pendant le déplacement de la filière d'extrudeuse (14) au moyen d'un dispositif de découpe (11) une fois terminée l'opération d'extrusion dans la première position de travail.

17. Utilisation d'un dispositif d'extrusion avec les caractéristiques de l'une quelconque des revendications 1 à 15 dans un procédé selon la revendication 16.
